# EUROPÄISCHE PATENTSCHRIFT

(11) **EP 2 567 426 B1**
(45) Veröffentlichungstag und Bekanntmachung des Hinweises auf die Patenterteilung: **14.02.2018**
(21) Anmeldenummer: 11715871.7
(22) Anmeldetag: 25.03.2011
(51) Int. Cl.: H01R 4/70, F04D 25/08

(54) **ELEKTRISCHER BAUGRUPPENANSCHLUSS EINES KRAFTFAHRZEUGS**
ELECTRICAL ASSEMBLY CONNECTION OF A MOTOR VEHICLE
CONNEXION DE MODULE ÉLECTRIQUE D'UN VÉHICULE À MOTEUR

(30) Priorität: 04.05.2010 DE 202010006401 U
(43) Veröffentlichungstag der Anmeldung: 13.03.2013
(73) Patentinhaber: Brose Fahrzeugteile GmbH & Co. Kommanditgesellschaft, Würzburg, 97076 Würzburg (DE)
(72) Erfinder: FLEISCHMANN, Karl-Heinz, 16348 Marienwerder (DE); GASS, Alexander, 10969 Berlin (DE)
(74) Vertreter: FDST Patentanwälte
(86) Internationale Anmeldenummer: PCT/EP2011/001497
(87) Internationale Veröffentlichungsnummer: WO 2011/137949

(56) Entgegenhaltungen:
- WO-A2-2007/129205
- DE-C1- 4 116 748
- GB-A- 827 134
- JP-A- 10 233 247
- NL-C2- 2 000 117
- US-A- 5 569 882

## Beschreibung

Die Erfindung betrifft einen elektrischen Motoranschluss, insbesondere eines Kühlerlüftermotors eines Kraftfahrzeugs, mit einem Anschlussterminal und daran angeschlossenem Leitungssatz.

Üblicherweise weist eine mit dem Bordnetz eines Kraftfahrzeugs elektrisch zu verbindende Baugruppe ein aus deren Gehäuse herausgeführtes Anschlussterminal (Baugruppenschnittstelle) auf, dessen Anschlusskontakte (Anschlussstellen) untereinander und zur Umgebung hin elektrisch isoliert sind. Die elektrische Verbindung der Baugruppe zum Bordnetz des Kraftfahrzeugs erfolgt in der Regel über Leitungen eines in einem Bordnetzkabel geführten Leitungssatzes, dessen eines Kabel- oder Leitungssatzende über eine Steckverbindung verfügt, und dessen anderes Kabel- bzw. Leitungssatzende elektrisch leitend mit der zu versorgenden Baugruppe über deren Anschlussterminal verbunden ist. Dieser elektrische Baugruppenanschluss der einzelnen Leitungen des Leitungssatzes mit dem Anschlussterminal kann durch eine Schweiß-, Lot-, Klemm- oder Crimpverbindung hergestellt werden.

Ein solcher Motoranschluss ist insbesondere auch bei einem bereits über Anschlussleitungen verfügenden Elektromotor vorgesehen, der beispielsweise als Antrieb eines Kühlerlüfters (Kühlerlüftermotor) des Kraftfahrzeugs dient. Der Kühlerlüftermotor wird zur Einstellung der erforderlichen Kühlleistung mittels einer elektrischen oder elektronischen Steuerschaltung betrieben. Die Stromversorgung des Kühlerlüftermotors erfolgt über ein Bordnetzkabel, das an eine Gleichstromquelle (Fahrzeugbatterie) des Kraftfahrzeugs angeschlossen ist. Dabei sind die Leitungsenden des vom Bordnetzkabel geführten Leitungssatzes an das Anschlussterminal angeschlossen, das praktisch die Motorschnittstelle zum eingesetzten, üblicherweise elektronisch gesteuerten Elektromotor bildet. Der Leitungssatz umfasst hierbei in der Regel zusätzlich zu den Versorgungsleitungen, d. h. dem Plus- und Minuspol der Versorgungsspannung, auch Steuer- und/oder Signalleitungen einer den Elektromotor steuernden bzw. erfasste Motordaten verarbeitenden Elektronik. Bei der Herstellung des elektrischen Baugruppen- oder Motoranschlusses erfolgt die elektrische Kontaktierung zwischen den Kontakten (Anschlussstellen) des Anschlussterminals und den Leitungsenden üblicherweise durch Schweißverbindungen.

Problematisch bei einem solchen Baugruppen- bzw. Motoranschluss ist eine mechanische Belastung, insbesondere eine Zugbelastung, zwischen dem den Leitungssatz enthaltenden Bordnetzkabel und dem Anschlussterminal des Elektromotors. Eine solche Zugebelastung kann zu einer Beschädigung oder Trennung des elektrischen Kontaktes am Baugruppen- bzw. Motoranschluss führen.

Ein weiteres Problem sind Umwelteinflüsse wie Temperaturschwankungen und Feuchtigkeit, die zu Korrosion am Baugruppen- bzw. Motoranschluss (Anschlussterminal) mit hohem Kontaktwiderstand oder mechanischer Instabilität (Wackelkontakt) führen kann. Ein gegebenenfalls auftretender Kurzschluss am Baugruppen- bzw. Motoranschluss kann zu einem Schaden im Bordnetz oder in der Baugruppe führen. Ferner kann die üblicherweise vorgeschriebene Berührungssicherheit gefährdet werden.

Ein aus der WO 2007/129205 A2 bekannter elektrischer Motoranschluss, bei dem die Leitungsenden des angeschlossenen Leitungssatz mit dem motorseitigen Anschlussterminal verbunden sind, weist ein Anschlussgehäuse mit zwei Gehäuseteilen auf, die im Montagezustand unter Bildung eines Hohlraumes zusammengesetzt sind und die anschlussseitigen Leitungsenden des Leitungssatzes aufnehmen, wobei eines der Gehäuseteile mindestens eine in den Hohlraum mündende Füllöffnung zum Einfüllen einer aushärtbaren Vergussmasse aufweist.

Der Erfindung liegt die Aufgabe zugrunde, einen besonders sicheren und zuverlässigen sowie langlebigen Motoranschluss anzugeben.

Diese Aufgabe wird erfindungsgemäß gelöst durch die Merkmale des Anspruchs 1. Vorteilhafte Ausgestaltungen, Weiterbildungen und Varianten sind Gegenstand der hierauf rückbezogenen Unteransprüche.

Demnach ist ein elektrischer ein Motoranschluss, insbesondere eines elektrischen Kühlerlüftermotors, eines Kraftfahrzeuges, mit motorseitigem Anschlussterminal und daran angeschlossenen Leitungen vorgesehen, deren Leitungsenden von einem Anschlussgehäuse abgedeckt sind. Hierbei weist das Anschlussgehäuse zwei Gehäuseteile auf, die im Montagezustand unter Bildung eines Hohlraums zusammengesetzt sind und die anschlussseitigen Leitungsenden der Leitungen des Leitungssatzes aufnehmen. Eines der Gehäuseteile, insbesondere ein deckelartiges Gehäuseoberteil, weist mindestens eine im Montagezustand in den Hohlraum mündende Füllöffnung zum Einfüllen einer aushärtbaren Vergussmasse auf.

Eines der Gehäuseteile umfasst mindestens eine Leitungsdurchführung, die eine sich in Richtung des Anschlussterminals öffnende kegelförmige Führungsinnenkontur aufweist, an welcher ein Klemmteil anliegt. Infolge einer Zugbelastung des Leitungssatzes gleitet das Klemmteil an der korrespondierenden Führungsinnenkontur entlang, so dass die entsprechende Leitung mit zunehmender Zugbelastung zunehmend geklemmt wird. Vorzugsweise weist das entsprechende Gehäuseteil zwei solcher Leitungsdurchführungen für die stromführenden Leitungen (Plus- und Minuspolleitungen) mit kegelförmigen Führungsinnenkonturen auf, die mit entsprechenden Klemmteilen zusammenwirken.

Zweckmäßigerweise ist die Vergussmasse ein Werkstoff mit guten Adhäsionseigenschaften, z. B. ein Silikon, Polyurethan oder ein Gießharz. Ferner weist ein Gehäuseteil eine Entlüftungsöffnung auf. Beispielsweise zwei oder drei Füllöffnungen ermöglichen beim Einfüllen der Vergussmasse eine schnelle und gleichmäßige Verteilung der Vergussmasse im Hohlraum des Anschlussgehäuses. Ferner weist ein Gehäuseteil eine Entlüftungsöffnung auf. Die Entlüftungsöffnung ermöglicht eine schnelle Befüllung ohne nachteiligen Lufteinschluss in der Vergussmasse. Im ausgehärteten Zustand umschließt die Vergussmasse den elektrischen Baugruppen- bzw. Motoranschluss innerhalb des Anschlussgehäuses und ist mit den Gehäuseteilen praktisch unlösbar - im Sinne einer Verklebung - gefügt. Das Anschlussgehäuse verbleit somit vorteilhafterweise dauerhaft am Baugruppen- bzw. Motoranschluss, wird also unverlorener Bestandteil desselben.

Zweckmäßiger Weise ist lediglich eines der Gehäuseteile schalenförmig, während dann das andere Gehäuseteil als Gehäusedeckel ausgeführt ist. Auch können beide Gehäuseteile als Gehäusehalbschalen ausgeführt sein. Das die Führungsinnenkonturen aufweisende Gehäuseunterteil ist schalenförmig, während dann das deckelartige Gehäuseoberteil die korrespondierenden Klemmteile trägt. Während die Anzahl der Führungsinnenkonturen und der Klemmteile geeigneterweise der Anzahl der Versorgungsleitungen entspricht, können die Steuer- bzw. Signalleitungen anschlussseitig auch ohne derartige Klemmführung im Anschlussgehäuse einliegen. Dazu sind diese länger ausgeführt, ragen also tiefer in das Anschlussgehäuse hinein als die durch Klemmteile zugentlasteten Versorgungsleitungen und werden dadurch geschützt, dass Zugkräfte durch die mittels der Klemmteile entlasteten Leitungen aufgenommen werden.

Das Klemmteil liegt an der jeweiligen Leitung an und weist eine sich vom Anschlussterminal weg, d. h. in Gegenrichtung zum Anschlussterminal verjüngende, kegel- oder keilförmige Außenkontur auf, die an der Führungsinnenkontur anliegt. Ferner weist eines der Gehäuseteile mindestens ein Fixierelement auf, das im Montagezustand in eine korrespondierende Kragenkontur des Motorgehäuses im Bereich des Anschlussterminals formschlüssig eingreift.

Durch die schalenförmige und deckelartige Ausgestaltung der Gehäuseteile wird ein Einlegen der Leitungen des Leitungssatzes vereinfacht. Die Verbindung zwischen dem anschlussgehäuseseitigen Fixierelement und der baugruppenseitigen Kragenkontur gewährleistet einen besonders einfachen und wirksamen Halt des Anschlussgehäuses an der Baugruppe bzw. am Motorgehäuse, insbesondere bei einer Zugbelastung zwischen diesen. Ferner erleichtert diese Formschlussverbindung zwischen dem zweiteiligen Anschlussgehäuse und der Baugruppe eine ein heitliche und korrekte Positionierung des Anschlussgehäuses, indem eine Führung beim Anlegen des Gehäuseunterteils gegeben ist.

Die Führungsinnenkontur und das Klemmteil, die insbesondere kegel- oder keilförmig ausgestaltet sind, bewirken eine besonders effektive kraft- bzw. reibschlüssige Verbindung, da die Haltekräfte bei einer Zugbelastung radial auf die Leitungen wirken und mit zunehmender Zugkraft ansteigen. Insbesondere die Kombination und Anordnung der Formschlussverbindung zwischen dem Anschlussgehäuse und der Baugruppe sowie der zugkraftabhängigen Leitungsklemmung gewährleistet eine zuverlässige Zugentlastung, so dass die elektrische Kontaktierung der Leitungen bei einer Zugbelastung über das Bordnetzkabel auf die elektrische Baugruppe zuverlässig erhalten bleibt.

Die Gehäuseteile sind im Montagezustand miteinander verrastet, wobei die montierten Gehäuseteile den Motoranschluss zumindest teilweise und hierbei insbesondere das Anschlussterminal mit den an dessen Anschlussstellen kontaktierten Leitungsenden übergreifen. Ferner weist eines der Gehäuseteile, insbesondere das schalenförmige Gehäuseunterteil, in den Hohlraum ragende Abstandselemente auf. Die Leitungen des Leitungssatzes sind im Montagezustand des Anschlussgehäuses zwischen den Abstandselementen angeordnet. Die Abstandselemente vermeiden ein ungewolltes Verschieben der Leitungen. Infolge der Verrastung der Gehäuseteile einerseits sowie das Übergreifen der montierten Gehäuseteile im Bereich des Anschlussterminals andererseits ist der aus den Gehäuseteilen gebildete Hohlraum dicht umschlossen, wodurch ein Auslaufen der Vergussmasse beim Befüllen und Aushärten vermieden wird. Infolge der Vermeidung eines Auslaufens können bereits während des Aushärtens der Vergussmasse weitere Prozess- oder Verarbeitungsschritte erfolgen, wodurch die Taktzeit und die Kosten bei der Herstellung der Baugruppe bzw. des Kühlerlüftermotors verringert werden.

Dies wird vorteilhafterweise dadurch erreicht, dass das zweiteilige, montierte Anschlussgehäuse an der elektrischen Baugruppe bzw. am Elektromotor verbleibt, so dass die Formgebung der Vergussmasse während des Aushärtens ohne zusätzliches Werkzeug erfolgt. Der Werkstoff des Anschlussgehäuses, das praktisch als Behälter für die Vergussmasse dient, und der Werkstoff der Isolierung des Anschlussterminals der Baugruppe bzw. des Elektromotors sollte gute Adhäsionseigenschaften zum verwendeten Vergussmaterial aufweisen. Idealerweise sollte der Werkstoff des Anschlussgehäuses (Behälter) dem Umspritzungswerkstoff des Anschlussterminals entsprechen.

Aufgrund des Verklebens der Bauteile (Anschlussgehäuse und Anschlussterminal) untereinander wird die Dichtheit des Anschlusses bzw. der Anschlussstellen gegen Feuchtigkeit gewährleistet. Gleichzeitig wird hierdurch die mechanische Stabilität und die Form des Vergusses bestimmt. Infolge des Einfüllens der geeigneterweise niedrig-viskosen Vergussmasse in das den Anschlussbereich umgebende Anschlussgehäuse kann im noch weitgehend dünnflüssigen, nicht gehär teten Zustand der Vergussmasse die Baugruppe weiter transportiert werden, so dass die weiteren Prozessschritte während der laufenden Aushärtezeit ausgeführt werden können. Dies bedeutet, dass im weiteren Prozessablauf nicht abgewartet werden muss, bis die Vergussmasse formstabil ist. Dies führt zu einer wesentlichen Verringerung der erforderlichen Fertigungszeit für den Verguss und die Weiterverarbeitung der Baugruppe. Gleichzeitig wird über die Gestaltung des Anschlussgehäuses in Verbindung mit der Gestaltung des Anschlussbereiches der Baugruppe bzw. des Elektromotors oder eines diesen aufweisenden Antriebs die zuverlässige Zugentlastung der Verbindungsstellen der Leitungen realisiert.

Der nach Art einer Versiegelung wirkende Umschluss des Motoranschlusses mit Vergussmasse sowie das Fügen der Gehäuseteile des Anschlussgehäuses mit der ausgehärteten Vergussmasse gewährleisten einen besonders wirksamen Schutz gegen Umwelteinflüsse und mechanische Belastungen. Da sich die flüssige Vergussmasse um das Anschlussterminal mit den daran kontaktierten Leitungsenden und dabei innerhalb des Anschlussgehäuses verteilt, ist eine hohe Flexibilität praktisch unabhängig von der Formgebung des Baugruppen- bzw. Motoranschlusses gegeben.

Nachfolgend wird ein Ausführungsbeispiel der Erfindung anhand einer Zeichnung näher erläutert. Darin zeigen:
- Fig. 1: in perspektivischer Darstellung einen Motoranschluss eines elektrischen Kühlerlüftermotor, mit an diesen angeschlossenen Leitungen eines Bordnetzkabels sowie mit einem Anschlussgehäuse, das mit Vergussmasse gefüllt oder befüllbar ist,
- Fig. 2: in perspektivischer Darstellung den Kühlerlüftermotor mit Blick auf ein Anschlussterminal ohne Anschlussgehäuse,
- Fig. 3 und 4: in perspektivischer Darstellung das Anschlussgehäuse, umfassend ein deckelartiges Gehäuseoberteil und ein schalenartiges Gehäuseunterteil in einer Explosionsdarstellung bzw. im zusammengesetzten Zustand,
- Fig. 5: in Draufsicht den Motoranschluss mit an Kontaktstellen des Anschlussterminals kontaktierten Leitungsenden und mit montiertem Gehäuseunterteil,
- Fig. 6: den Motoranschluss mit angeschlossenem Leitungssatz gemäß Fig. 5 in einer Unteransicht auf das montierte Anschlussgehäuse, und
- Fig. 7: in einer zur Zeichenebene der Fig. 6 parallelen Schnittdarstellung den Motoranschluss mit gefügtem Anschlussgehäuse mit einer Klemmung einzelner Leitungen als Zugentlastung.

Einander entsprechende Teile sind in allen Figuren mit den gleichen Bezugszeichen versehen.

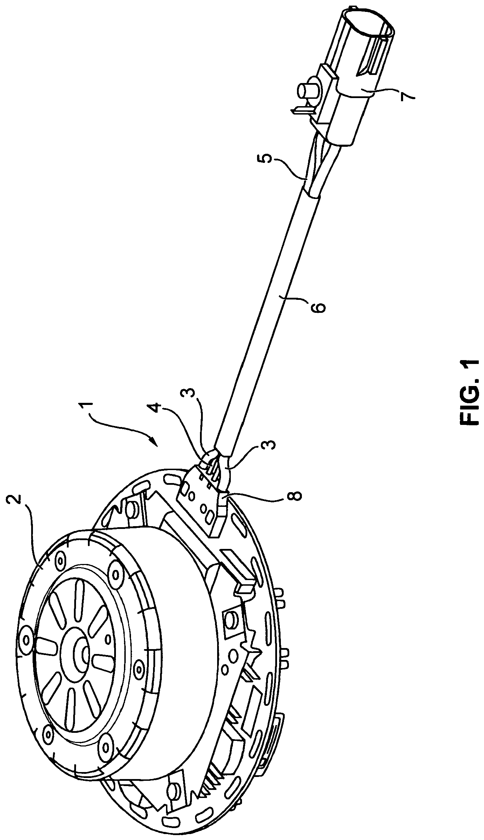

Die Fig. 1 zeigt in perspektivischer Darstellung einen elektrischen Motoranschluss 1 eines Gleichstrom-Kühlerlüftermotors (Elektromotor) 2 mit daran angeschlossenen Versorgungsleitungen 3 und Signal- oder Steuerleitungen 4 eines Leitungssatzes 5 eines Bordnetzkabels 6. Das Bordnetzkabel 6 trägt an einem dem Kühlerlüftermotor 2 abgewandten Ende einen Steckverbinder 7. Ein mit Vergussmasse gefülltes Anschlussgehäuse 8 umschließt ein hier nicht sichtbares Anschlussterminal des Kühlerlüftermotors 2. Bedingt durch die notwendige Stromtragfähigkeit weisen die Versorgungsleitungen 3 im Verhältnis zu den Steuer- bzw. Signalleitungen 4 einen vergleichsweise großen Leitungsdurchmesser auf. Anstelle des Kühlerlüftermotors 2 kann auch eine andere elektrische Baugruppe mit angeschlossenen Leitungen den Anschluss als Baugruppenanschluss 1 bilden.

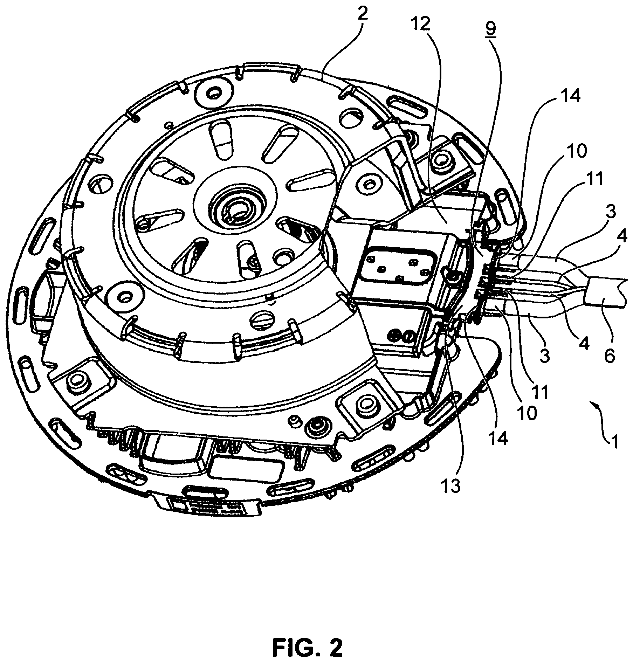

Die Fig. 2 zeigt in perspektivischer Ansicht den Kühlerlüftermotor 2 mit Blick auf dessen Anschlussterminal 9 mit einer der Anzahl der Versorgungs- und Signal- oder Steuerleitungen 3 bzw. 4 entsprechenden Anzahl von Anschlusskontakten (Anschlussstellen) 10 bzw. 11. Das Anschlussterminal 9 bildet quasi eine Motorschnittstelle, die einerseits mit einer Elektronik 12 des Kühlerlüftermotors 2 verbunden ist und dessen bzw. deren Anschlusskontakte 10,11 von einem Stanzblechkamm aus Kupferblech gebildet sind. Die mit den Anschlusskontakten oder -stellen 10,11 und somit mit dem Anschlussterminal 9 verbunden, insbesondere durch Verschweißen elektrisch leitend kontaktierten Leiterenden der Leitungen 3,4 bilden den Motoranschluss 1.

Im Kühlerlüfterbetrieb wird der Kühlerlüftermotor 2 über die in nicht näher dargestellter Art und Weise mit der Fahrzeugbatterie verbundenen Versorgungsleitungen 3 mit Gleichstrom gespeist. Die Steuer- oder Signalleitungen 4 dienen zur Steuerung des Motors 2 bzw. zum Datenaustausch der Kühlerlüfterelektronik 12 und einer Fahrzeugelektronik. Beispielweise werden im Kühlerlüfterbetrieb über die Steuer- und Signalleitungen 4 Steuerbefehle von der Kraftfahrzeugelektronik an den Kühlerlüftermotor 2 bzw. Betriebsinformationen des Kühlerlüftermotors 2, wie beispielsweise die Drehzahl, an die Kraftfahrzeugelektronik 12 übermittelt.

Das Anschlussterminal 9 ist benachbart zu den Leitungsenden der Leitungen 3,4 mit einer isolierenden Umspritzung 13 aus Polybutylenterephthalat (PBT) versehen, welche die Anschlusskontakte 10,11 in einem Teilbereich umschließt. Die Umspritzung 13 weist beidseitig des Anschlussterminals 9 eine Kragen- oder Formschlusskontur 14 auf.

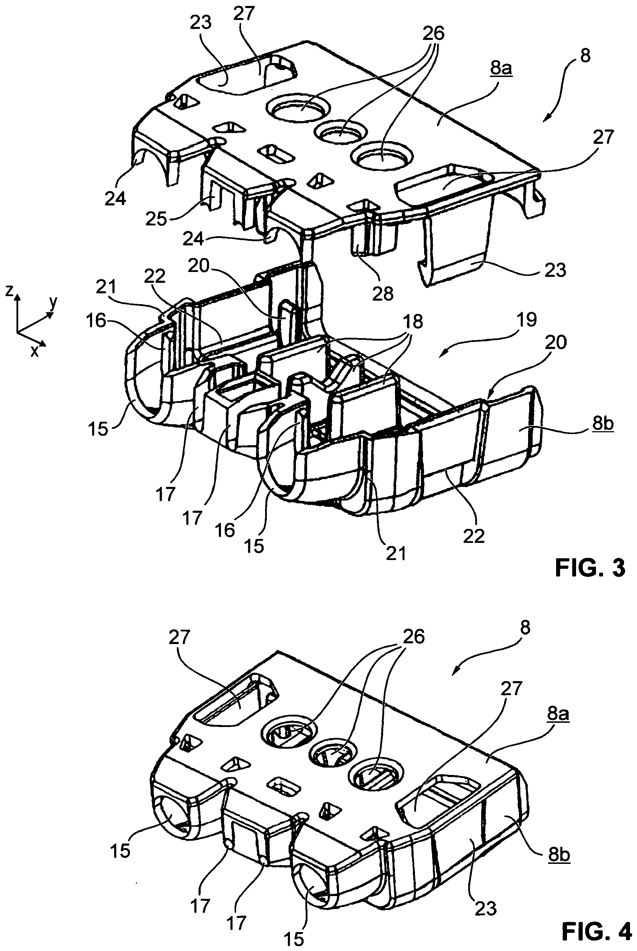

Die Fig. 3 und 4 zeigen perspektivisch das Anschlussgehäuse 8 mit einem deckelartigen Gehäuseoberteil 8a und einem schalenförmigen Gehäuseunterteil 8b im ungefügten bzw. im zusammengesetzten Zustand. Beide Gehäuseteile 8a und 8b sind aus einem thermoplastischen Kunststoff, beispielsweise aus Polybutylenterephthalat (PBT) gefertigt. Das schalenförmige Gehäuseunterteil 8b weist im Bereich von Leitungsdurchführungen 15 für die Versorgungsleitungen 3 kegelförmige Führungsinnenkonturen 16 auf.

Entlang der bezogen auf das dargestellte Koordinatensystem in x-Richtung zwischen den beiden äußeren Leitungsdurchführungen 15 für die Versorgungsleitungen 3 befinden sich zwei Leitungsdurchführungen 17 für die Steuer bzw. Signalleitungen 4 im Gehäuseunterteil 8b. Zudem sind in den in y-Richtung verlaufenden Einführrichtungen für die Leitungen 3,4 im Ausführungsbeispiel drei domartige Abstandselemente 18 bodenseitig an das Gehäuseunterteil 8b angeformt. Diese laufen bei im Anschlussgehäuse 8 einliegenden Leitungsenden der Leitungen 3,4 zwischen diesen und ragen in einen zwischen dem Gehäuseoberteil 8a und dem Gehäuseunterteil 8b gebildeten Hohlraum 19 auf.

Des Weiteren weist das Gehäuseunterteil 8b auf der den Leitungsdurchführungen 15,17 gegenüberliegenden Gehäuseseite innenseitig angeformte Fixierelemente 20 an den in x-Richtung gegenüberliegenden Gehäusewänden 21 des Gehäuseunterteils 8b auf. Ferner weist das Gehäuseunterteil 8b zwei Rastausnehmungen 22 an den einander gegenüberliegenden Gehäusewänden 21 auf. In diese Rastausnehmungen 22 greifen Rasthaken 23 ein, die an den Gehäusedeckel 8a angeformt sind. Den durch diese Rastverbindung 22,23 zusammengesetzten Zustand des Anschlussgehäuses 8 unter Bildung des Hohlraums 19 zeigt Fig. 4.

An das Gehäuseoberteil 8a angeformte Ausnehmungen 24 setzen im in Fig. 4 gezeigten zusammengesetzten Zustand des Anschlussgehäuses 8 die Leitungsdurchführungen 15 zu einer Kreisform fort. Eine zwischen diesen Ausnehmungen 24 angeformte, im Ausführungsbeispiel eckige Ausnehmung 26 schließt die Leitungsdurchführung 17 für die Steuer- bzw. Signalleitungen 4 zur umfangsseitig geschlossenen Durchführung 17 ab.

Das Gehäuseoberteil 8a weist zudem drei etwa mittig angeordnete Füllöffnungen 26 sowie im Bereich der Rasthaken 23 jeweils eine Entlüftungsöffnung 27 auf. Die Einfüllöffnungen 26 dienen zum Befüllen des Hohlraums 19 des Anschlussgehäuses 8 bei darin einliegenden und an das Anschlussterminal 9 angeschlossenen Leitungsenden der Leitungen 3,4 mit einer Vergussmasse. Die Entlüftungsöffnungen 27 ermöglichen hierbei ein zügiges Entweichen der bei Einfüllen der Vergussmasse verdrängten Luft. An das Gehäuseoberteil 8a sind im Bereich zwischen den Rasthaken 23 und den Leitungsdurchführungen 15 in x-Richtung gehäuserandseitig Klemmteile 28 zumindest geringfügig schwenkbeweglich angeformt.

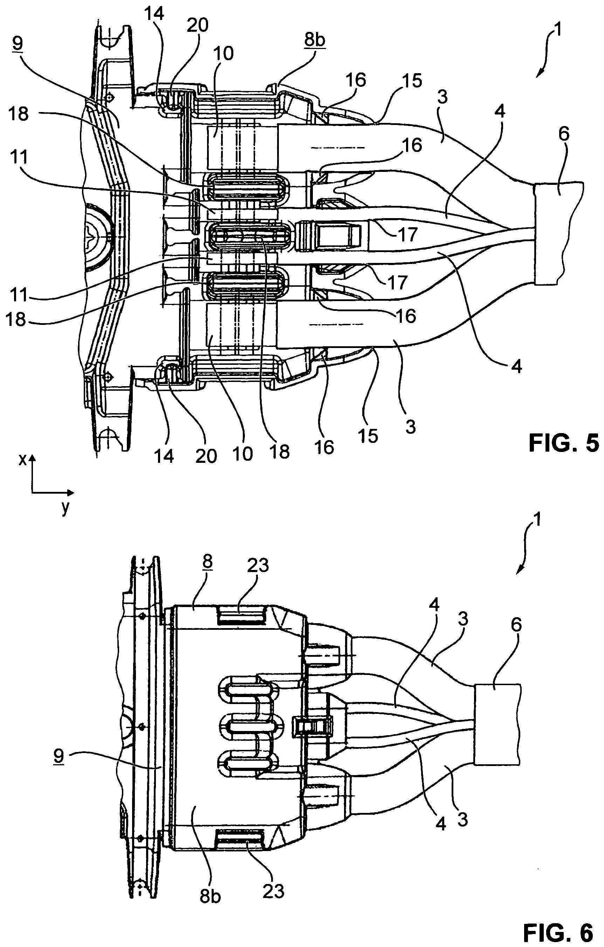

Fig. 5 zeigt in Draufsicht den Motor- bzw. Baugruppenanschluss 1 im Bereich des Anschlussterminals 9 mit an den Anschlusskontakten 10,11 - beispielsweise durch Schweißverbindungen - kontaktierten Leitungsenden der Leitungen 3 und 4 bei angesetztem Gehäuseunterteil 8b ohne Gehäuseoberteil 8a. Erkennbar greifen die Fixierelemente 20 in die Kragenkontur 14 des Anschlussterminals 9 formschlüssig ein. Ebenfalls erkennbar gewährleisten die zwischen den Anschlussleitungen 3,4 empor ragenden Abstandselemente 18 eine zuverlässige Positionierung der Leitungsenden der Leitungen 3 und 4 und verhindern zuverlässig deren unerwünschte Kontaktierung miteinander. Die sich konisch in y-Richtung verjüngenden und sich mithin in Richtung zum Anschlussterminal 9 hin öffnenden Führungsinnenkonturen liegen an den Leitungen 3 an.

Fig. 6 zeigt den Motor- bzw. Baugruppenanschluss 1 in einer Unteransicht auf das Anschlussgehäuse 8, dessen Hohlraum 19 vollständig mit Vergussmasse ausgefüllt ist (nicht erkennbar). Die Versorgungsleitungen 3 und die Signalleitungen 4 sind von den Leitungsdurchführungen 15 bzw. 17 vollständig umschlossen. Das Anschlussgehäuse 8 schließt im Bereich des Anschlussterminals 9 mit dessen Umspritzung 13 ab.

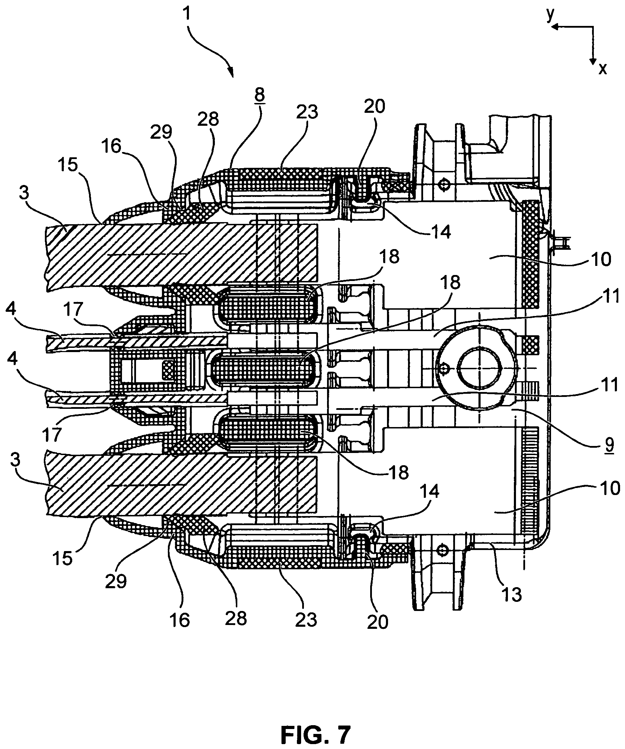

Fig. 7 zeigt den Motor- bzw. Baugruppenanschluss 1 mit montiertem Anschlussgehäuse 8 im Schnitt in y-Richtung entlang der Mittelebene der Versorgungsleitungen 3. Erkennbar greifen die Fixierelemente 20 des Gehäuseunterteils 8b in die korrespondierende Kragenkontur 14 der Umspritzung 13 des Anschlussterminals 9 ein. Die an das Gehäuseoberteil 8a angeformten Klemmteile 28 sind an dessen der jeweiligen Führungsinnenkontur 16 zugewandten Seite mit einer kegel- oder keilförmigen Außenkontur 29 versehen, mit der das jeweilige Klemmteil 28 an der korrespondierenden Führungsinnenkontur 16 anliegt. Zudem liegt der jeweilige Klemmkeil 28 an der entsprechenden Versorgungsleitung kraft- bzw. reibschlüssig an.

Die sich in y-Richtung und somit in Gegenrichtung zum Anschlussterminal 9 verjüngenden Führungsinnenkonturen 16 des Gehäuseunterteils 8b und Klemmteilaußenkonturen 29 des Gehäuseoberteils 8a gleiten bei einer Zugbelastung an dem Leitungssatz 3,4 bzw. am Bordnetzkabel 6 in y-Richtung rampenartig, d. h. nach Art einer schiefen Ebene aneinander. Aufgrund der sich dadurch infolge der in y-Richtung bewirkenden Zugbelastung ergebenden Kraftkomponente quer hierzu in x-Richtung wird eine mit zunehmender Zugkraft ansteigende Kraftwirkung auf die Leitungen 3 ausgeübt, so dass die Versorgungsleitungen 3 praktisch in Leiterlängsrichtung y nahezu unverschiebbar vom Anschlussgehäuse 8 gehalten sind.

Diese Zugentlastung ist wirksam und daher besonders vorteilhaft, zumindest so lange, bis die in das Anschlussgehäuse 8 eingefüllte Vergussmasse noch nicht oder noch nicht vollständig ausgehärtet ist. Dies wiederum bedingt den erheblichen Vorteil, dass auch während des noch nicht vollendeten Aushärtungsprozesses der Vergussmasse die Baugruppe bzw. der Kühlerlüftermotor 1 mit bereits angeschlossenem und kontaktiertem Leitungssatz 3,4 und somit angeschlossenem Bordnetzkabels 6 einem weiteren Herstellungs- oder Fertigungsprozess zugeführt werden kann, ohne dass sich die dadurch bedingte Bewegung auf den gefügten Anschluss 1 nachteilig auswirkt. Nach erfolgter Aushärtung der Vergussmasse ist diese mit dem Anschlussterminal 9 sowie mit dem Anschlussgehäuse 8 im Sinne einer guten adhäsiven Verklebung zuverlässig gefügt sowie gegen Feuchtigkeit und andere Umwelteinflüsse besonders langlebig vor betriebsbedingten mechanischen Belastungen geschützt.

### Bezugszeichenliste

- 1: Motor-/Baugruppenanschluss
- 2: Kühlerlüftermotor
- 3: Versorgungsleitung
- 4: Signalleitung
- 5: Leitungssatz
- 6: Bordnetzkabel
- 7: Steckverbinder
- 8: Anschlussgehäuse
- 8a: Gehäuseoberteil
- 8b: Gehäuseunterteil
- 9: Anschlussterminal
- 10: Anschlusskontakt/-stelle
- 11: Anschlusskontakt/-stelle
- 12: Motor-/Baugruppenelektronik
- 13: Umspritzung
- 14: Kragenkontur
- 15: Leitungsdurchführung
- 16: Führungsinnenkontur
- 17: Leitungsdurchführung
- 18: Abstandselemente
- 19: Hohlraum
- 20: Fixierelement
- 21: Gehäusewand
- 22: Rastausnehmung
- 23: Rasthaken
- 24: Ausnehmung
- 25: Ausnehmung
- 26: Einfüllöffnung
- 27: Entlüftungsöffnung
- 28: Klemmteil
- 29: Klemmkeilaußenkontur

## Patentansprüche

1. Elektrischer Motoranschluss (1) mit einem Anschlussterminal (9) und daran angeschlossenem Leitungssatz (5), dessen Leitungsenden mit dem motorseitigen Anschlussterminal (9) verbunden sind, und mit einem Anschlussgehäuse (8) mit zwei Gehäuseteilen (8a,8b), die im Montagezustand unter Bildung eines Hohlraumes (19) zusammengesetzt sind und die anschlussseitigen Leitungsenden des Leitungssatzes (5) aufnehmen,
- wobei eines der Gehäuseteile (8a) mindestens eine in den Hohlraum (19) mündende Füllöffnung (26, 27) zum Einfüllen einer aushärtbaren Vergussmasse aufweist,
- wobei die ausgehärtete Vergussmasse die Leitungsenden im Bereich des Anschlussterminals (9) umschließt und mit den Gehäuseteilen (8a, 8b) gefügt ist,
- wobei eines (8b) der beiden Gehäuseteile (8a, 8b) schalenförmig oder als Gehäusehalbschale und das andere (8a) der beiden Gehäuseteile (8a, 8b) deckelartig oder ebenfalls als Gehäusehalbschale ausgeführt ist,
- wobei das eine (8b) der beiden Gehäuseteile (8a, 8b) mindestens eine Leitungsdurchführung (15) umfasst, die eine sich in Richtung des Anschlussterminals (9) öffnende kegelförmige Führungsinnenkontur (16) aufweist, und
- wobei das andere (8a) der beiden Gehäuseteile (8a, 8b) ein Klemmteil (28) aufweist, das an der Führungsinnenkontur (16) anliegt und infolge einer Zugbelastung des Leitungssatzes (5) an der korrespondieren Führungsinnenkontur (16) entlang gleitet und die entsprechende Leitung (15) mit ansteigender Zugbelastung zunehmend klemmt.

2. Elektrischer Motoranschluss (1) nach Anspruch 1,
**dadurch gekennzeichnet,**
**dass** das Klemmteil (28) eine an der jeweiligen Leitung (3) anliegende und sich in Gegenrichtung (y) zum Anschlussterminal (9) verjüngende kegel- oder keilförmige Außenkontur (29) aufweist.

3. Elektrischer Motoranschluss (1) nach Anspruch 1 oder 2,
**gekennzeichnet durch**
mindestens eine Entlüftungsöffnung (26,27) in einem der Gehäuseteile (8a,8b).

4. Elektrischer Motoranschluss (1) nach einem der Ansprüche 1 bis 3,
**dadurch gekennzeichnet,**
**dass** die Gehäuseteile (8a, 8b) im Montagezustand miteinander verrastet sind.

5. Elektrischer Motoranschluss (1) nach einem der Ansprüche 1 bis 4,
**dadurch gekennzeichnet,**
**dass** eines der Gehäuseteile (8a, 8b) mindestens ein Fixierelement (20) aufweist, das im Montagezustand in eine anschlussseitige Kragenkontur (14) formschlüssig eingreift.

6. Elektrischer Motoranschluss (1) nach einem der Ansprüche 1 bis 5,
**dadurch gekennzeichnet,**
**dass** eines der Gehäuseteile (8a, 8b) in den Hohlraum (19) ragende Abstandselemente (18) zwischen den Leitungen (3,4) des Leitungssatzes (5) aufweist.

7. Elektrischer Motoranschluss (1) nach einem der Ansprüche 1 bis 6,
**dadurch gekennzeichnet,**
**dass** die montierten Gehäuseteile (8a, 8b) das Anschlussterminal (9) über die Leiterenden hinaus übergreifen.

8. Kühlerlüftermotor (2) eines Kraftfahrzeugs, mit einem elektrischen Motoranschluss (1) nach einem der Ansprüche 1 bis 7.

## Claims

1. Electrical motor connection (1) having a connection terminal (9) and a cable harness (5) connected thereto, the cable ends of which are connected to the motor-side connection terminal (9), and having a connection housing (8) having two housing parts (8a, 8b), which are assembled to form a cavity (19) in the assembled state and which receive connection-side cable ends of the cable harness (5),
- wherein one of the housing parts (8a) has at least one filling opening (26, 27) opening into the cavity (19) for filling with a curable casting compound,
- wherein the cured casting compound surrounds the cable ends in the region of the connection terminal (9) and is joined to the housing parts (8a, 8b),
- wherein one (8b) of the two housing parts (8a, 8b) is constructed to be shell-shaped or constructed as a housing half shell and the other (8a) of the two housing parts (8a, 8b) is constructed to be cover-like or likewise as a housing half shell,
- wherein the one (8b) of the two housing parts (8a, 8b) comprises at least one cable bushing (15) which has a conical guide inner contour (16) that opens in the direction of the connection terminal (9), and
- wherein the other (8a) of the two housing parts (8a, 8b) has a clamping part (28) that abuts the guide inner contour (16) and, as a result of a tensile load of the cable harness (5), glides along on the corresponding guide inner contour (16) and clamps the corresponding cable (15) increasingly with rising tensile load.

2. Electrical motor connection (1) according to claim 1,
**characterised in that**,
the clamping part (28) has a conical or wedge-shaped outer contour (29) abutting the respective cable (3) and tapering in the opposite direction (y) to the connection terminal (9).

3. Electrical motor connection (1) according to claim 1 or 2,
**characterised by**
at least one vent hole (26, 27) in one of the housing parts (8a, 8b).

4. Electrical motor connection (1) according to one of claims 1 to 3,
**characterised in that**,
the housing parts (8a, 8b) are interlocked in the assembled state.

5. Electrical motor connection (1) according to one of claims 1 to 4,
**characterised in that**,
one of the housing parts (8a, 8b) has at least one fixing element (20) which positively engages with a connection-side collar contour (14) in the assembled state.

6. Electrical motor connection (1) according to one of claims 1 to 5,
**characterised in that**,
one of the housing parts (8a, 8b) has spacer elements (18) projecting into the cavity (19) between the cables (3, 4) of the cable harness (5).

7. Electrical motor connection (1) according to one of claims 1 to 6,
**characterised in that**,
the assembled housing parts (8a, 8) extend over the connection terminal (9) beyond the conductor ends.

8. Radiator fan motor (2) of a motor vehicle having an electrical motor connection (1) according to one of claims 1 to 7.

## Revendications

1. Raccord de connexion électrique de moteur (1) comprenant une partie terminale de connexion (9) à laquelle est raccordé un jeu de conducteurs (5), dont les extrémités de conducteurs sont reliées à la partie terminale de connexion (9), et comprenant également un boitier de connexion (8) avec deux parties de boitier (8a, 8b), qui, dans l'état monté, sont réunies en formant une cavité (19) et accueillent les extrémités de conducteurs du jeu de conducteurs (5), situées du côté connexion, raccord de connexion électrique
- dans lequel une des parties de boitier (8a) présente au moins une ouverture de remplissage (26, 27) débouchant dans ladite cavité (19) et destinée à en permettre le remplissage à l'aide d'une masse de scellement durcissable,
- dans lequel la masse de scellement durcie entoure les extrémités de conducteurs dans la zone de la partie terminale de connexion (9), et est assemblée aux parties de boitier (8a, 8b),
- dans lequel l'une (8b) des deux parties de boitier (8a, 8b) est réalisée sous forme de coque ou en tant que demi-coque de boitier, et l'autre (8a) des deux parties de boitier (8a, 8b) est réalisée sous forme de couvercle ou également en tant que demi-coque de boitier,
- dans lequel ladite une (8b) des deux parties de boitier (8a, 8b) comporte au moins un passage de conducteur (15), qui présente un contour intérieur de guidage (16) de forme conique s'ouvrant en direction de la partie terminale de connexion (9),
et
- dans lequel l'autre (8a) des deux parties de boitier (8a, 8b) comporte une partie de serrage (28), qui s'appuie sur le contour intérieur de guidage (16) et, suite à une sollicitation de traction du jeu de conducteurs (5), glisse le long du contour intérieur de guidage (16) correspondant, et serre de manière croissante le conducteur (15) respectivement considéré lorsque la sollicitation de traction augmente.

2. Raccord de connexion électrique de moteur (1) selon la revendication 1,
**caractérisé**
**en ce que** la partie de serrage (28) présente un contour extérieur (29) de forme conique ou en forme de coin, qui s'appuie sur le conducteur (3) respectif et se rétrécit en direction opposée (y) à celle allant vers la partie terminale de connexion (9).

3. Raccord de connexion électrique de moteur (1) selon la revendication 1 ou la revendication 2,
**caractérisé**
**par** au moins une ouverture de purge d'air (26, 27) dans l'une des parties de boitier (8a, 8b).

4. Raccord de connexion électrique de moteur (1) selon l'une des revendications 1 à 3,
**caractérisé**
**en ce que** les parties de boitier (8a, 8b) sont encliquetées l'une avec l'autre dans l'état monté.

5. Raccord de connexion électrique de moteur (1) selon l'une des revendications 1 à 4,
**caractérisé**
**en ce que** l'une des parties de boitier (8a, 8b) comporte au moins un élément de fixation (20), qui, dans l'état monté, s'engage par complémentarité de formes dans un contour en forme de collerette (14) du côté de la connexion.

6. Raccord de connexion électrique de moteur (1) selon l'une des revendications 1 à 5,
**caractérisé**
**en ce que** l'une des parties de boitier (8a, 8b) présente des éléments d'espacement (18) faisant saillie dans la cavité (19) entre les conducteurs (3, 4) du jeu de conducteurs (5).

7. Raccord de connexion électrique de moteur (1) selon l'une des revendications 1 à 6,
**caractérisé**
**en ce que** les parties de boitier (8a, 8b) une fois montées, surmontent la pièce terminale de connexion (9) au-delà des extrémités de conducteurs.

8. Moteur de ventilateur de refroidissement (2) d'un véhicule automobile, comprenant un raccord de connexion électrique de moteur (1) selon l'une des revendications 1 à 7.
